# EUROPEAN PATENT APPLICATION

(11) **EP 4 554 233 A1**
(43) Date of publication of application: **14.05.2025**
(21) Application number: 23835451.8
(22) Date of filing: 30.06.2023
(51) Int. Cl.: H04N 21/436, H04N 21/443

(54) **INFORMATION PROCESSING DEVICE, CONTROL METHOD FOR INFORMATION PROCESSING DEVICE, AND PROGRAM**

(30) Priority: 06.07.2022 JP 2022108894
(71) Applicant: Sony Interactive Entertainment Inc., Tokyo 108-0075 (JP)
(72) Inventor: AIZAWA, Takahiro, Tokyo 108-0075 (JP); AOKI, Sachiyo, Tokyo 108-0075 (JP); OKABAYASHI, Taichi, Tokyo 108-0075 (JP); MATSUMURA, Michiko, Tokyo 108-0075 (JP); HATASAWA, Yasunari, Tokyo 108-0075 (JP); IKEDA, Takakazu, Tokyo 108-0075 (JP); KOGE, Masahiro, Tokyo 108-0075 (JP); OGISO, Toru, Tokyo 108-0075 (JP)
(74) Representative: D Young & Co LLP
(86) International application number: PCT/JP2023/024508
(87) International publication number: WO 2024/009919

(57) **Abstract**

An information processing device is connected to a video output machine, and outputs a video signal to the video output machine. The information processing device includes a processor and a storage section. The processor executes an application, receives a setting of an automatic low latency mode and holds the setting in the storage section, and operates on assumption that the automatic low latency mode is ON regardless of the setting of the automatic low latency mode held in the storage section, when video signals are to be outputted with variable refresh rate according to a process of the application being executed.

## Description

### [Technical Field]

The present invention relates to an information processing device that outputs a video signal to a video output machine, a control method for the information processing device, and a program.

### [Background Art]

After HDMI (registered trademark: High-Definition Multimedia Interface) 2.1a, various kinds of function expansion of variable refresh rate (VRR), or particularly, Gaming-VRR and QMS-VRR (Quick Media Switching VRR), ALLM (Auto Low latency Mode), and the like have been achieved, and specifications corresponding to these functions are under development.

Among them, Gaming-VRR enables video output from a video signal outputting device (source) to a display (sink) with delay as low as possible. When Gaming-VRR is used, it is required to activate ALLM (see the specifications of HDMI 2.1a).

### [Summary]

### [Technical Problems]

In a common game apparatus, Gaming-VRR is normally set to ON because use of Gaming-VRR matches a user's intension as long as Gaming-VRR is usable. Therefore, ALLM is normally set to ON.

However, some game machines output videos of movies distributed over the internet or the like, in recent years. Further, there are also users' requests to enjoy high-quality game images. In these cases, it is preferable to set ALLM to OFF because precedence should be given to the image quality over low latency.

However, if a setting to set ALLM to OFF is introduced, when an application side of a game or the like requires Gaming-VRR but ALLM is OFF, for example, Gaming-VRR cannot be set to ON due to the above-mentioned specifications. To set ALLM appropriately while utilizing the Gaming-VRR function, it is necessary for a user to switch the ON/OFF of ALLM each time an application for outputting video signals is switched. This causes a problem that the convenience is low.

The present invention has been made in view of the above-mentioned circumstances, and one object thereof is to provide an information processing device that sets a low latency mode according to a user's request, and improves the convenience of the setting, control method for the information processing device, and a program.

### [Solution to Problems]

One aspect of the present invention for solving the above-mentioned conventional problems, is an information processing device that is connected to a video output machine and that outputs a video signal to the video output machine, the information processing device including a processor and a storage section, in which the processor executes an application, receives a setting of an automatic low latency mode and holds the setting in the storage section, and operates on assumption that the automatic low latency mode is ON regardless of the setting of the automatic low latency mode held in the storage section when video signals are to be outputted with variable refresh rate according to a process of the application being executed.

According to the present invention, a low latency mode can be set according to a user's request, and the convenience of the setting can be improved.

### [Brief Description of Drawings]

[FIG. 1]

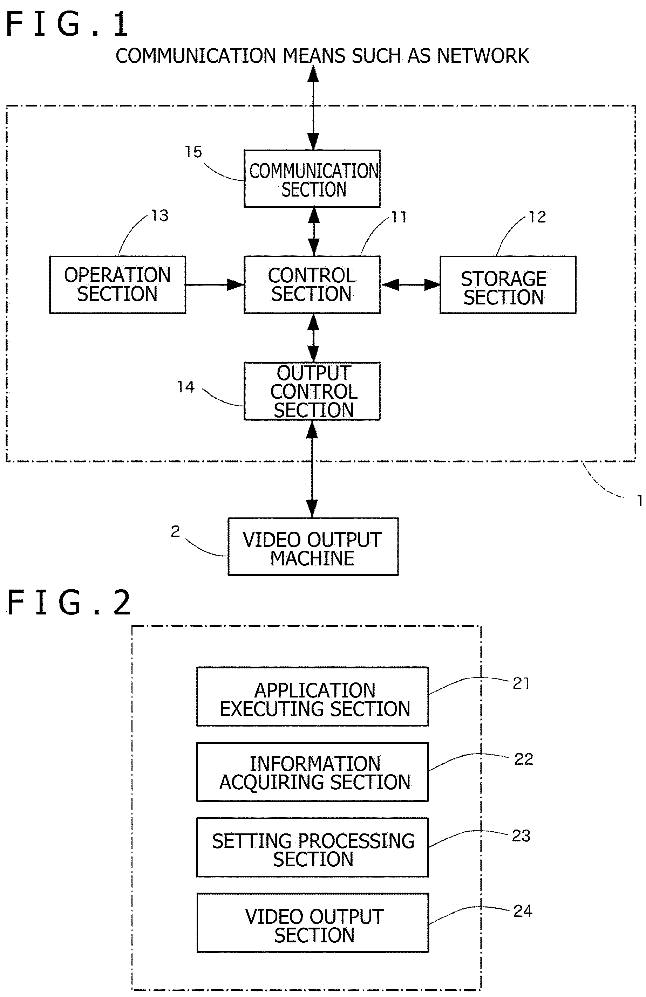

   FIG. 1 is a block diagram depicting a configuration of an information processing device and a connection example thereof according to an embodiment of the present invention.
[FIG. 2]
   FIG. 2 is a functional block diagram depicting an example of the information processing device according to the embodiment of the present invention.
[FIG. 3]

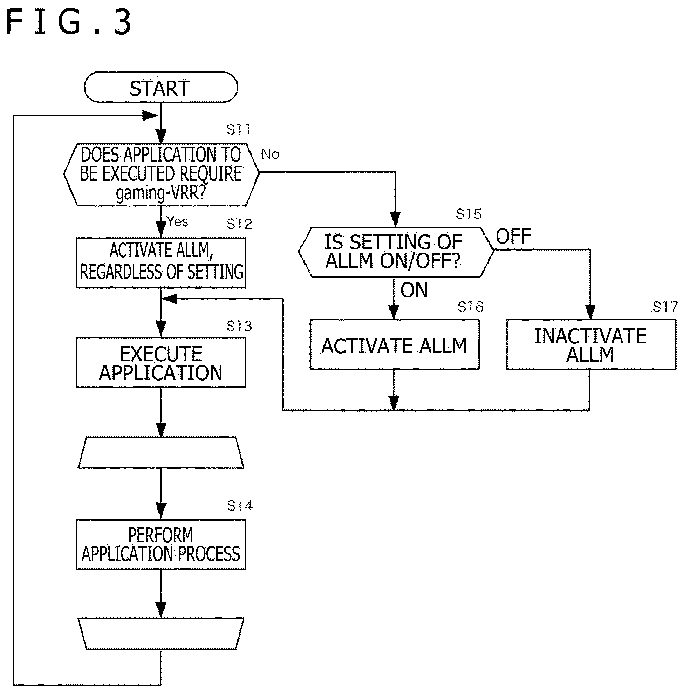

   FIG. 3 is a flowchart of an operation example of the information processing device according to the embodiment of the present invention.

### [Description of Embodiment]

An embodiment of the present invention will be explained with reference to the drawings. For example, an information processing device 1 according to the embodiment of the present invention is a program control device such as a home game machine or a personal computer. As depicted in FIG. 1, the information processing device 1 includes a control section 11 as a processor, a storage section 12, an operation section 13, an output control section 14, and a communication section 15. The information processing device 1 is connected to a video output machine 2 such as a display.

The control section 11 is a program control device that operates according to a program stored in the storage section 12. In an example of the present embodiment, the control section 11 executes a program of an application, and further, receives a setting of an automatic low latency mode (ALLM) and holds this setting in the storage section 12. In addition, the control section 11 operates on the assumption that the automatic low latency mode is ON regardless of the setting of the automatic low latency mode held in the storage section 12 when video signals are to be outputted with gaming variable refresh rate (Gaming-VRR) according to a process of the application being executed. Further, the operation of the control section 11 will be explained in detail later.

The storage section 12 includes a memory device, a disk device, or the like. The storage section 12 stores a program that is executed by the control section 11. The program may be provided in a state of being stored in a computer-readable and non-transitory recording medium, and then, be copied in the storage section 12. In addition, the storage section 12 also operates as a work memory of the control section 11.

The operation section 13 is connected to input devices including a game controller, a mouse, and a keyboard in a communicable manner, receives, from these input devices, information indicating the content of a command operation performed by a user, and outputs the information to the control section 11.

The output control section 14 outputs a video signal and a control signal to the video output machine 2 in accordance with a command inputted from the control section 11. The communication section 15 is a network interface or the like, and communicates with, for example, a server connected over a network, in accordance with a command inputted from the control section 11.

Next, operation of the control section 11 will be explained. As depicted in FIG. 2, the control section 11 according to the present embodiment functionally includes an application executing section 21, an information acquiring section 22, a setting processing section 23, and a video output section 24.

The application executing section 21 executes an application program (hereinafter, simply abbreviated as application) designated by a user, and performs a process according to the application. Applications that are executed by the application executing section 21 include various types of programs such as a game program and a video reproduction program for reproducing a video distributed over a network, etc.

Incidentally, in one example of the embodiment of the present invention, it is assumed that whether or not to require variable refresh rate output of video signals (Gaming-VRR requiring application) is previously set for each of applications installed in the information processing device 1, and that the settings (application settings) are stored in the storage section 12.

At a prescribed timing such as a start time of the information processing device 1, the information acquiring section 22 communicates with the video output machine 2 connected to the information processing device 1, and acquires information indicating that whether or not the video output machine 2 supports video output with variable refresh rate (Gaming-VRR) (is Gaming-VRR capable or not) and whether or not the video output machine 2 supports automatic low latency mode (ALLM) (is ALLM-capable or not).

The setting processing section 23 receives a setting concerning the automatic low latency mode from a user. Here, the setting concerning the automatic low latency mode indicates, for example, to set the automatic low latency mode to ON (a mode of indicating the low latency mode according to the information processing device 1's determination, if needed), or set the automatic low latency mode to OFF (a mode in which the information processing device 1 does not indicate the low latency mode).

After the information acquiring section 22 acquires information indicating whether or not the video output machine 2 connected to the information processing device 1 is ALLM-capable at the timing such as the start time of the information processing device 1, the setting processing section 23 initializes at least part of the setting with reference to the information. Specifically, if information indicating that the video output machine 2 connected to the information processing device 1 is not ALLM-capable is acquired, the setting processing section 23 sets the automatic low latency mode to OFF, and stores and holds information indicating this setting in the storage section 12.

Further, if the information indicating that the video output machine 2 connected to the information processing device 1 is ALLM-capable is acquired, the setting processing section 23 sets the automatic low latency mode to ON, and stores and holds information indicating this setting in the storage section 12.

Furthermore, the setting processing section 23 acquires the current (at the time point of the above command) setting of the automatic low latency mode held in the storage section 12 in response to a command inputted by a user, displays the content of the setting, and allows the user to select the ON or OFF of the automatic low latency mode.

Herein, when the user performs a setting to set the automatic low latency mode to ON, the setting processing section 23 checks the information which is acquired by the information acquiring section 22 to indicate whether or not the video output machine 2 is ALLM-capable. When determining that the video output machine 2 is not ALLM-capable according to the information, the setting processing section 23 notifies the user of an error and maintains the OFF state of the automatic low latency mode.

Further, when checking the information indicating whether or not the video output machine 2 is ALLM-capable and determining that the video output machine 2 connected to the information processing device 1 is ALLM-capable according to the information, the setting processing section 23 sets the automatic low latency mode to ON according to the user's setting, and stores and holds information indicating this setting in the storage section 12.

On the other hand, when the user is allowed to select the ON or OFF of the automatic low latency mode and the user performs a setting to set the automatic low latency mode to OFF, the setting processing section 23 sets the automatic low latency mode to OFF according to the user's setting, and stores and holds information indicating this setting in the storage section 12.

The video output section 24 determines whether or not the application being executed by the application executing section 21 is a Gaming-VRR requiring application which requires variable refresh rate output of video signals. When the application being executed by the application executing section 21 is not a Gaming-VRR requiring application, the video output section 24 operates according to the setting of the automatic low latency mode held in the storage section 12.

In this case, if the setting of the automatic low latency mode held in the storage section 12 is "ON," the video output section 24 gives a command to activate the automatic low latency mode to the video output machine 2. Then, the video output section 24 outputs a video signal that is to be outputted according to operation of the application executing section 21, to the video output machine 2.

Here, according to a condition predetermined according to an inputted video signal (e.g. a condition using information that indicates the type of a video inputted from the information processing device 1), the video output machine 2 performs display output of a video while performing switching between the low latency mode and a non-low latency mode (referred to as a normal mode) without a manual operation. This operation of the video output machine 2 is widely known, and thus, a detailed explanation thereof will be omitted here.

In contrast, if the setting of the automatic low latency mode held in the storage section 12 is "OFF," the video output section 24 gives a command to inactivate the automatic low latency mode to the video output machine 2. Then, the video output section 24 outputs a video signal that is to be outputted according to operation of the application executing section 21, to the video output machine 2.

Here, the video output machine 2 performs display output of a video in a normal mode that is different from the low latency mode, regardless of a video signal inputted from the information processing device 1 or information indicating the type of the video.

On the other hand, when determining whether or not the application being executed by the application executing section 21 is a Gaming-VRR requiring application which requires variable refresh rate output of video signals and finding that the application being executed by the application executing section 21 is a Gaming-VRR requiring application, the video output section 24 operates on the assumption that the automatic low latency mode is ON regardless of the setting of the automatic low latency mode held in the storage section 12, and gives a command to activate the automatic low latency mode to the video output machine 2.

In this case, therefore, according to a condition predetermined according to an inputted video signal (e.g. a condition using information indicating the type of a video inputted from the information processing device 1), the video output machine 2 performs display output of a video while performing switching between the low latency mode and the non-low latency mode (referred to as the normal mode) without a manual operation.

It is to be noted that, in the explanation given so far, the video output section 24 determines whether or not the application being executed by the application executing section 21 is a Gaming-VRR requiring application.
(1) In a case where the application executing section 21 is executing one application (single task): the video output section 24 determines whether or not the one application under execution is a Gaming-VRR requiring application.

In addition,
(2) in a case where the application executing section 21 is executing a plurality of applications parallelly (multitask): the video output section 24 may determine whether or not at least one of the applications under execution is a Gaming-VRR requiring application.
(2') In a case where the application executing section 21 is executing a plurality of applications parallelly (multitask) and some of the applications indicates output of video signals: the video output section 24 may determine whether or not at least one of the applications indicating output of video signals is a Gaming-VRR requiring application.

In the latter case, if one of the applications being executed by the application executing section 21 is under full-screen operation (only video signals according to the indication by the application are outputted while video outputs according to indications by the remaining applications are halted), the video output section 24 determines whether or not the application under the full-screen operation is a Gaming-VRR requiring application.

### [Operation]

The present embodiment basically has the above-mentioned configuration, and operation thereof is as follows. It is to be noted that the following explanation is based on the assumption that the information processing device 1 causes a plurality of applications to be operated in parallel, but any one of the applications is operated in full screen (during the full-screen operation, none of videos based on indications by the remaining applications is outputted).

By communicating with the video output machine 2 connected to the information processing device 1 at the start time of the information processing device 1, the information processing device 1 acquires information indicating whether or not the video output machine 2 supports video output with variable refresh rate (Gaming-VRR) (is Gaming-VRR capable or not) and whether or not the video output machine 2 supports the automatic low latency mode (ALLM) (is ALLM-capable or not), for example, and holds this information in the storage section 12. The following example is based on the assumption that the video output machine 2 connected to the information processing device 1 is ALLM-capable.

A user operates the information processing device 1 to perform a setting concerning the automatic low latency mode in advance. For example, a user who uses an application for mainly viewing a distributed video on the information processing device 1, performs a setting to set the automatic low latency mode to OFF. Then, the information processing device 1 sets the automatic low latency mode to OFF according to the user's setting, and stores and holds information indicating this setting in the storage section 12.

Thereafter, when receiving a user's command to start executing a process of any one of installed applications, the information processing device 1 starts a process indicated in FIG. 3. The information processing device 1 checks whether or not the application to be started in accordance with the command is set to output video signals with variable refresh rate (S11).

When the application to be started in accordance with the indication is set to output video signals with variable refresh rate (S11: Yes), the information processing device 1 operates on the assumption that the automatic low latency mode is ON regardless of the setting of the automatic low latency mode held in the storage section 12, and gives a command to activate the automatic low latency mode to the video output machine 2 (S12).

Further, the information processing device 1 starts the application to be started in accordance with the command and brings the application into full-screen operation (S13). Thereafter, the information processing device 1 executes a process of the application until a command to exit the application or a command to perform switching to another application is given (S14).

When a command to exit the application or to perform switching to another application is given, the information processing device 1 determines that a command to start executing a switched application is given (if a command to exit the application is given, switching to a generally-called shell application, which is for starting an application or the like, is performed). Then, the information processing device 1 returns to step S11 to continue the process.

On the other hand, when the application to be started in accordance with the command is not set to output video signals with variable refresh rate in step S11 (S11: No), the information processing device 1 checks the setting of the automatic low latency mode held in the storage section 12 (S15). When this setting indicates "ON" (S15: "ON"), a command to activate the automatic low latency mode is given to the video output machine 2 (S16). Then, the information processing device 1 proceeds to step S13 to continue the process.

Further, when the checked setting of the automatic low latency mode indicates "OFF" in step S15 (S15: "OFF"), a command to inactivate the automatic low latency mode is given to the video output machine 2 (S17). Then, the information processing device 1 proceeds to step S13 to continue the process.

As a result of the above operation of the information processing device 1 according to one example of the present embodiment, a command to activate/inactivate ALLM is given as follows.

### (1) A case where the connected video output machine 2 is not ALLM-capable

In this case, the information processing device 1 sets ALLM to OFF, and notifies the user of an error when the user sets ALLM to ON.

(2) A case where the connected video output machine 2 is ALLM-capable In this case, the information processing device 1 operates according to the user's ON/OFF setting of ALLM, as follows.
(a) When an application started by the user and caused to output a video is not set to require Gaming-VRR output of video signals (the application is set to perform, for example, fixed refresh rate output of video signals),
according to the user's setting of ALLM held in the storage section 12, the information processing device 1 gives a command to inactivate the automatic low latency mode to the video output machine 2 when the setting indicates OFF. Then, the process of the application is continued.

Alternatively, the information processing device 1 gives a command to activate the automatic low latency mode to the video output machine 2 when the setting indicates ON. Then, the process of the application is continued.
(b) When an application started by the user and caused to output a video is set to require Gaming-VRR output of video signals,
regardless of the user's setting of ALLM held in the storage section 12 (whichever of ON or OFF the setting indicates), the information processing device 1 gives a command to activate the automatic low latency mode to the video output machine 2. Then, the process of the application is continued.

In this manner, in a case where Gaming-VRR is used while the low latency mode is set according to a user's request, the low latency mode is activated regardless of the user's setting, in the present embodiment. Accordingly, the convenience of the setting is improved.

### [Setting of Gaming-VRR]

Further, in an example of the present embodiment, in a case where the information processing device 1 receives a user's setting indicating whether or not to allow Gaming-VRR output of video signals, the information processing device 1 may operate as follows.

In this example, regarding a command to activate/inactivate ALLM, the information processing device 1 operates in the same manner as the previously explained one in (1) a case where the connected video output machine 2 is not ALLM-capable. The information processing device 1 operates in the same manner as the previously explained one also in (2) a case where the connected video output machine 2 is ALLM-capable and (a) an application started by the user and caused to output a video is not set to require Gaming-VRR output of video signals.

On the other hand, in (2) a case where the connected video output machine 2 is ALLM-capable but (b) an application started by the user and caused to output a video is set to require Gaming-VRR output of video signals, the user's setting of Gaming-VRR is checked, and the information processing device 1 gives a command to activate the automatic low latency mode to the video output machine 2 regardless of the user's setting of ALLM held in the storage section 12 (that is, whichever ON or OFF the setting indicates) when the user's setting indicates to allow Gaming-VRR output of video signals. Then, the process of the application is continued (in the similar manner to that of the above explanation).

However, in (2) a case where the connected video output machine 2 is ALLM-capable and (b) an application started by the user and caused to output a video is set to require Gaming-VRR output of video signals, and further, the user's setting indicates to prohibit Gaming-VRR output of video signals (the Gaming-VRR is OFF and output of video signals with, for example, fixed refresh rate is indicated), the information processing device 1 gives, according to the user's setting of ALLM held in the storage section 12, a command to inactivate the automatic low latency mode to the video output machine 2 when the setting indicates OFF. Then, the process of the application is continued.

On the other hand, the information processing device 1 gives a command to activate the automatic low latency mode to the video output machine 2 when the setting indicates ON. Then, the process of the application is continued.

It is to be noted that, when a setting to output video signals with fixed refresh rate has been performed (that is, when Gaming-VRR is OFF), the information processing device 1 may receive a setting of whether to set ALLM to ON/OFF. In this example, only when a setting to output video signals with, for example, fixed refresh rate has been performed, a menu for setting ALLM to ON/OFF is presented on a setting screen. Further, in this example, when a setting to output video signals with fixed refresh rate has been performed, control of the automatic low latency mode based on this setting is performed. That is, the information processing device 1 gives a command to inactivate the automatic low latency mode to the video output machine 2 according to the user's setting of ALLM held in the storage section 12, and executes a process of the application when the setting indicates OFF, or the information processing device 1 gives a command to activate the automatic low latency mode to the video output machine 2 and executes the process of the application when the setting indicates ON. In addition, when the fixed refresh rate output of video signals is OFF (that is, when Gaming-VRR is ON), the information processing device 1 may set ALLM to ON and may cause the setting screen to indicate that ALLM is fixed to an ON state. Here, the information processing device 1 may hold, in the storage section 12, a user's setting concerning the ON/OFF of ALLM received during the OFF time of Gaming-VRR (that is, when a video is being outputted with fixed refresh rate), and may restore the held setting of ALLM when a next setting to set Gaming-VRR to OFF (that is, outputting a video at a fixed refresh rate) is performed.

### [Switching Independent of Application]

It is to be noted that, in such a way, in a case where the information processing device 1 has received a user's setting of whether or not to allow Gaming-VRR output of video signals, the information processing device 1 may perform a process of deciding whether or not to activate ALLM on the basis of this setting regardless of whether or not an application to be started is configured to set to require Gaming-VRR output of video signals.

That is, in this example,

### (1) A case where the connected video output machine 2 is not ALLM-capable

In this case, the information processing device 1 sets ALLM to OFF, and notifies the user of an error when the user sets ALLM to ON.

(2) A case where the connected video output machine 2 is ALLM-capable In this case, according to the user's ON/OFF setting of ALLM, the information processing device 1 operates as follows.

(a') When the user's setting indicates to allow Gaming-VRR output of video signals,
according to the user's setting of ALLM held in the storage section 12, the information processing device 1 gives a command to inactivate the automatic low latency mode to the video output machine 2 when the setting indicates OFF. Then, the information processing device 1 performs the process of the application.

Alternatively, the information processing device 1 gives a command to activate the automatic low latency mode to the video output machine 2 when the setting indicates ON. Then, the information processing device 1 performs the process of the application.

On the other hand, (b') when the user's setting indicates to prohibit Gaming-VRR output of video signals,
the information processing device 1 gives a command to activate the automatic low latency mode to the video output machine 2 regardless of the user's setting of ALLM held in the storage section 12 (that is, whichever ON or OFF the setting indicates), and then, performs the process of the application.

### [Switching When Application is being Executed]

In the explanation given so far, an application setting for defining whether or not Gaming-VRR output of video signals is required is held for each application, and the information processing device 1 determines whether or not an application to be executed is defined to require Gaming-VRR output of video signals according to this application setting, and performs a process of activating/inactivating ALLM. However, the present embodiment is not limited to this.

Incidentally, in a certain example of the present embodiment, the information processing device 1 may perform the process of activating/inactivating ALLM when a process of an application is being executed and Gaming-VRR output of video signals is required according to the process of the application. In this example, at the start time of the application, the information processing device 1 gives a command to activate/inactivate ALLM to the video output machine 2 according to the user's setting of ALLM held in the storage section 12 when the connected video output machine 2 is ALLM-capable.

Thereafter, when Gaming-VRR output of video signals is required according to the process of the application during execution of the process of the application, the information processing device 1 gives a command to activate the automatic low latency mode to the video output machine 2 regardless of the user's setting of ALLM held in the storage section 12 (that is, whichever ON or OFF the setting indicates), and then, continues the process of the application.

Further, when the Gaming-VRR output of video signals is finished according to the process of the application during execution of the process of the application (when the output is switched to fixed refresh rate output of video signals), the information processing device 1 gives a command to activate/inactivate ALLM to the video output machine 2 again according to the user's setting of ALLM held in the storage section 12, and then, continues the process of the application.

In this example, a selection can be made as to whether to cause the application to follow the user's ON/OFF setting of ALLM according to a video signal inputted from the application, or to forcibly set ALLM to ON in order to use Gaming-VRR. Accordingly, during execution of, for example, a game application, the information processing device 1 sets Gaming-VRR to ON and sets ALLM to ON regardless of the user's setting, for a scene of a battle or the like in which the real-time property is important. In contrast, for a scene to enjoy a landscape or the like, the information processing device 1 decides to set ALLM to ON/OFF according to the user's setting. Accordingly, with the information processing device 1 according to the present embodiment, video output can be performed according to a user's selection.

### [Reference Signs List]

- 1:: Information processing device
- 2:: Video output machine
- 11:: Control section
- 12:: Storage section
- 13:: Operation section
- 14:: Output control section
- 15:: Communication section
- 21:: Application executing section
- 22:: Information acquiring section
- 23:: Setting processing section
- 24:: Video output section

## Claims

1. An information processing device that is connected to a video output machine and that outputs a video signal to the video output machine, the information processing device comprising:
a processor; and
a storage section, wherein
the processor
executes an application,
receives a setting of an automatic low latency mode and holds the setting in the storage section, and
operates on assumption that the automatic low latency mode is ON regardless of the setting of the automatic low latency mode held in the storage section, when video signals are to be outputted with variable refresh rate according to a process of the application being executed.

2. The information processing device according to claim 1, wherein, in a case where the application being executed is an application that outputs video signals with variable refresh rate, the processor operates on assumption that the automatic low latency mode is ON regardless of the setting of the automatic low latency mode held in the storage section, when the application is being executed.

3. The information processing device according to claim 1, wherein, when the application being executed requires variable refresh rate output of video signals, the processor operates on assumption that the automatic low latency mode is ON regardless of the setting of the automatic low latency mode held in the storage section.

4. An information processing device that is connected to a video output machine and that outputs a video signal to the video output machine, the information processing device comprising:
a processor; and
a storage section, wherein
the processor
executes an application,
receives a setting of an automatic low latency mode and holds the setting in the storage section, and
controls the automatic low latency mode according to the setting of the automatic low latency mode held in the storage section, when video signals are to be outputted with fixed refresh rate according to a process of the application being executed.

5. A control method for an information processing device that is connected to a video output machine and that outputs a video signal to the video output machine, the information processing device including a processor and a storage section, the control method comprising:
causing the processor
to execute an application;
to receive a setting of an automatic low latency mode and hold the setting in the storage section; and
to operate on assumption that the automatic low latency mode is ON regardless of the setting of the automatic low latency mode held in the storage section, when video signals are to be outputted with variable refresh rate according to a process of the application being executed.

6. A program for an information processing device that is connected to a video output machine and that outputs a video signal to the video output machine, the program being for causing the information processing device to function:
to execute an application;
to receive a setting of an automatic low latency mode and hold the setting; and
to operate on assumption that the automatic low latency mode is ON regardless of the held setting of the automatic low latency mode when video signals are to be outputted with variable refresh rate according to a process of the application being executed.
